# EUROPÄISCHE PATENTSCHRIFT

(11) **EP 0 909 727 B1**
(45) Veröffentlichungstag und Bekanntmachung des Hinweises auf die Patenterteilung: **11.06.2003**
(21) Anmeldenummer: 98250321.1
(22) Anmeldetag: 10.09.1998
(51) Int. Cl.: B65G 21/06, B65G 21/02

(54) **Traggestell für Förderer, insbesondere für Rollenbahnen**
Supporting frame for conveyors, especially for roller conveyors
Cadre de support pour convoyeurs, en particulier pour des transporteurs à rouleaux

(30) Priorität: 16.09.1997 DE 19741663
(43) Veröffentlichungstag der Anmeldung: 21.04.1999
(73) Patentinhaber: Siemens Aktiengesellschaft, 80333 München (DE)
(72) Erfinder: Färber, Karl, 64823 Gross-Umstadt (DE); Kleta, Otto, 63584 Gründau-Rothenbergen (DE); Bosch, Harald, 63500 Seligenstadt (DE)

(56) Entgegenhaltungen:
- EP-A- 0 611 711
- EP-A- 0 623 530
- DE-A- 4 308 982
- GB-A- 696 224
- US-A- 4 172 677
- US-A- 5 421 451

## Beschreibung

Die Erfindung betrifft ein Traggestell für Förderer, insbesondere für Rollenbahnen gemäß dem Oberbegriff des Anspruchs 1.

Aus der deutschen Patentanmeldung DE-4 308 982 - A1 ist bereits ein Rahmengestell für Förderer bekannt, welches aus sich in Förderbandlängsrichtung erstrekkenden Holmen besteht, welche mittels Querverbinder leiterartig miteinander verbunden sind.

Aus der europäischen Patentanmeldung EP 0 623 530 A1 ist bereits ein Traggestell für die Aufhängung eines Hängeförderers bekannt, das im wesentlichen aus stranggepreßten Profilelementen besteht, die über Verbindungselemente zu dem Traggestell zusammenschraubbar sind. Die im Querschnitt rechteckförmigen Profilelemente weisen hierzu an allen Längsseiten und in deren Längsrichtung verlaufende T-förmige Nuten auf, in die hammerkopfförmige Klemmsteine in Form von Schraubenmuttern von oben durch die Öffnung der Nut einlegbar sind. Nach dem Einlegen werden die Klemmsteine innerhalb der Nut um nahezu 90 ° vor deren Befestigung verdreht, damit sich der Klemmstein an den Innenseiten der Hinterschneidungen der Nut abstützen kann. Über die von dem Klemmstein aufgenommene und aus der Nut herausragende Schraube ist somit ein Verbindungselement an einer beliebigen Stelle entlang des Profilelementes anschraubbar. Jedes Verbindungselement weist hierzu eine Bohrung auf, durch die die Schraube des Klemmsteins hindurchgeführt ist. Je nach Ausbildung und Anordnung der mindestens zwei Bohrungen an dem Verbindungselement können die Profilelemente in gewünschten Winkeln zueinander, übereinander und zur Verlängerung hintereinander miteinander verschraubt werden. Als Vorteil dieser Lösung ist angegeben, daß durch die Ausbildung der Verbindungselemente die Ausrichtungen und Positionen der Profilelemente vorab festgelegt werden können, so daß der Einbau wesentlich erleichtert wird. Auch werden durch die durchgehende T-Nut und die unterschiedliche Ausgestaltung der Verbindungselemente eine große Vielfalt an Montagepositionen erreicht.

Derartig ausgebildete Traggestelle weisen den Nachteil auf, daß die Profilelemente nur über Klemmkräfte miteinander verbunden sind und somit bezüglich ihrer Belastbarkeit begrenzt sind. Bei Überlastung neigen die Klemmsteine zum Verrutschen in der T-förmigen Nut.

Desweiteren ist in der europäischen Patentschrift EP 0 611 711 B1 bereits ein Traggestell für einen Bandförderer für Stückgut beschrieben, das im wesentlichen aus horizontal und vertikal verlaufenden Rohrprofilabschnitten besteht, die über Verbindungselemente klemmend miteinander verbunden sind. Über die Verbindungselemente kann jeweils nur ein Anfang oder ein Ende eines Rohrprofils rechtwinklig an einem weiteren Rohrprofil befestigt werden. Das Verbindungselement besteht im wesentlichen aus zwei Klemmbereichen, die über eine Verschraubung an die Rohrprofile andrückbar sind. Der erste Klemmbereich ist nach Art einer einfach geöffneten Rohrschelle ausgebildet, die auf das erste Rohrprofil aufschiebbar ist. Die beiden freien Schenkel des schellenartigen ersten Klemmbereiches sind derartig verlängert und verbreitert ausgebildet, daß in jedem Schenkel eine halbkreisförmige Einbuchtung zur Aufnahme des Anfangs oder Endes des zweiten Rohrprofils angeordnet ist. Seitlich an die halbkreisförmigen Abschnitte anschließend sind in dem Schenkel zusätzlich Bohrungen für Verschraubungen angeordnet, durch die die beiden Klemmbereiche des Verbindungselementes an die Profilrohre andrückbar sind. Gemäß den Ausführungen in der Patentschrift zeichnet sich dieses Traggestell durch eine einfache und kostengünstige Konstruktion aus.

Die Ausbildung der Verbindungselemente nach Art einer Rohrschelle mit zwei Klemmbereichen kann sich jedoch als nachteilig erweisen, da über die Schraubverbindung gleichzeitig beide Klemmbereiche an die Rohrprofile angedrückt werden. Hierbei sind jedoch die Klemmkräfte direkt abhängig von den Fertigungstoleranzen des Verbindungselementes und der Rohrprofile, so daß beispielsweise die Klemmkraft an dem ersten Rohrprofilelement vermindert wird, wenn das zweite Rohrprofil einen größeren Durchmesser als vorgesehen aufweist. Eine gleichmäßige Klemmung der beiden Profilrohre ist daher kaum zu erreichen. Darüber hinaus eignen sich auch diese Verbindungselemente, da diese mit Reibschluß arbeiten, nur für begrenzte Belastungen.

Der vorliegenden Erfindung liegt die Aufgabe zugrunde, ein weiteres Traggestell für Förderer, insbesondere für Rollenbahnen, zu schaffen, das leicht montierbar und kostengünstig ist, sowie sichere Verbindungselemente aufweist.

Diese Aufgabe wird bei einem Traggestell für Förderer, insbesondere für Rollenbahnen durch die im Anspruch 1 aufgeführten Merkmale gelöst. Vorteilhafte Ausgestaltungen der Erfindung sind in den Unteransprüchen 2 bis 6 angegeben.

Erfindungsgemäß wird durch die Ausbildung des Traggestells aus Profilelementen mit Vertiefungen sowie in die Vertiefungen einsteckbaren Verbindungselementen mit komplementär zu den Vertiefungen ausgebildeten Ansatzkörpern, wobei die eingesteckten Verbindungselemente über eine Verschraubung an dem Profilelement gehalten werden, eine konstruktiv einfache Traggestell-Konstruktion geschaffen, die leicht an dem vorgesehenen Aufstellort zu montieren ist. Desweiteren können für einen schnellen Aufbau des Traggestells die benötigten Längen der Profilelemente vorab zugeschnitten werden, so daß für die Montage nur die einzelnen Profilelemente über die Verbindungselemente miteinander verschraubt werden müssen.

Außerdem erweist es sich als besonders vorteilhaft, daß die Steckverbindung zwischen dem Ansatzkörper und der Vertiefung in dem Profilelement formschlüssig ausgebildet ist, da hierdurch das Traggestell im zusammengebauten Zustand eine hohe Festigkeit, insbesondere Standfestigkeit, erhält. Auch werden hierdurch die Lasten zwischen den Profilelementen sicher weitergeleitet. Als konstruktiv besonders einfache Lösung, eine formschlüssige Verbindung zu schaffen, hat sich die Ausbildung der Vertiefungen als langlochförmige Durchgangsbohrungen bewährt, in die hierzu komplementär ausgebildete Ansatzkörper in Form von Paßfedern einsteckbar sind. Darüber hinaus bietet diese Steckverbindung gute Übertragungseigenschaften für die Kräfte quer zur Steckrichtung. Die Sicherung der Verbindung der Profilelemente mit dem Verbindungskörper erfolgt über eine Schraube, die durch eine in dem Ansatzkörper angeordnete Bohrung, die in Steckrichtung ausgerichtet ist, geführt ist und an dem dem Profilelement abgewandten Ende mit einer Mutter versehen ist. Auf der gegenüberliegenden Seite ragt der Schraubenkopf seitlich über den Ansatzkörper hinaus und stützt sich somit auf dem angrenzenden Profilelement ab.

Als bevorzugt hat sich die Ausbildung der Profilelemente in Form von U-Profilen erwiesen, in deren Steg die Vertiefungen in Längsrichtung der Profilelemente hintereinander sowie voneinander mit gleichem Abstand beabstandet angeordnet sind. Hierdurch ergibt sich eine vorgegebene Teilung, die eine ausreichende Anzahl von Kombinationsmöglichkeiten der Verbindungselemente mit den Profilelementen bietet. Um mindestens zwei Profilelemente miteinander verbinden zu können, weisen die Verbindungselemente mindestens zwei voneinander beabstandete Ansatzkörper auf, an die sich ebene Auflageflächen anschließen. Auf der Auflagefläche wird der Steg des U-profilförmigen Profilelementes abgestützt und durch die Verschraubung auch gehalten. Damit ein ausreichender Anpreßdruck durch die Verschraubung gewährleistet ist, ist -in Steckrichtung gesehen- die Tiefe der langlochförmigen Durchgangsbohrung geringfügig größer gewählt als die Höhe des Ansatzkörpers.

Die Erfindung wird nachfolgend anhand von einem in einer Zeichnung dargestellten Ausführungsbeispiel näher beschrieben. Es zeigen:
- Figur 1: eine Ansicht eines Traggestells für eine Rollenbahn,
- Figur 2: eine Detailansicht eines Verbindungselementes des Traggestells gemäß Figur 1 und
- Figur 3: eine Ansicht eines Anschlußelementes des Traggestells gemäß Figur 1.

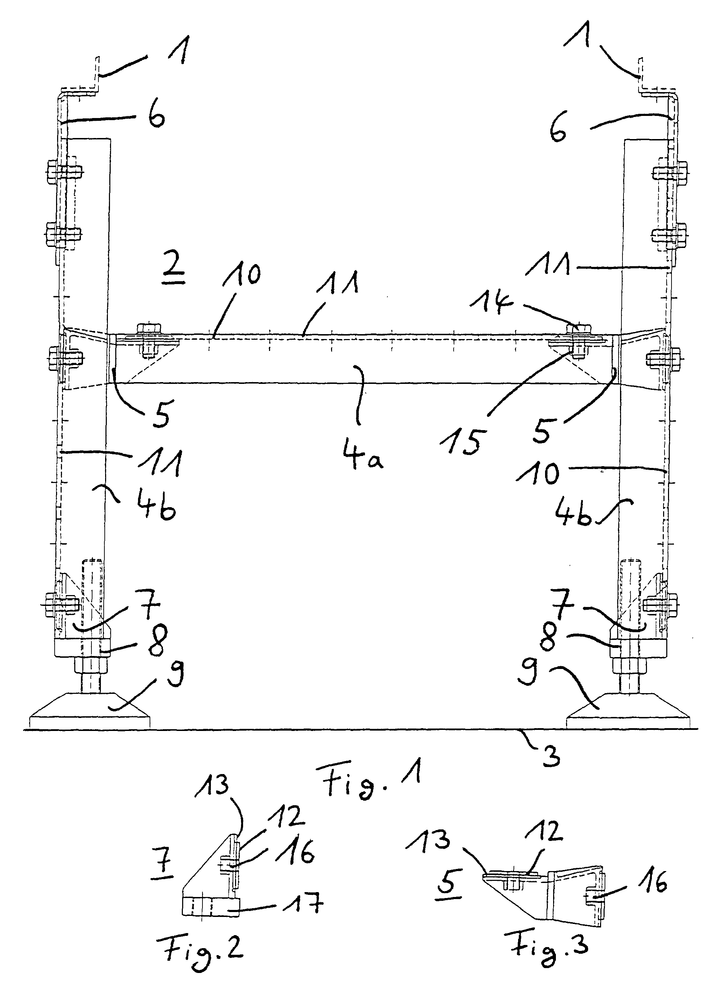

Die Figur 1 zeigt eine Ansicht eines als Rollenbahn ausgebildeten Förderers, der im wesentlichen aus einer nur durch ihre Längsträger 1 angedeuteten Rollen-Fördereinheit und einem Traggestell 2 besteht. Die Längsträger 1 und somit der Förderer ist über das Traggestell 2 auf einer Aufstandsfläche 3, z. B. einem Hallenboden, aufgestellt. Es ist auch grundsätzlich möglich, das Traggestell 2 für eine hängende Anordnung des Förderers zu verwenden. Das Traggestell 2 besteht im wesentlichen aus horizontal und vertikal verlaufenden Profilelementen 4a und 4b, die über Verbindungselemente 5 zu einem im Querschnitt gesehen H-förmigen Rahmen zusammengesteckt und anschließend verschraubt sind. An die oberen Enden der vertikal verlaufenden Profilelemente 4b sind Anschlußplatten 6 angeschraubt, auf deren abgewinkelten freien Enden die Längsträger 1 befestigt sind. An dem gegenüberliegenden unteren Ende des vertikal verlaufenden Profilelementes 4b ist ein Anschlußelement 7 angeschraubt, das eine in Vertikalrichtung verlaufende Gewindebohrung 8 aufweist, in die ein hierdurch in Vertikalrichtung einstellbarer Stützfuß 9 eingeschraubt ist.
Für die Verschraubung der Profilelemente 4a und 4b mit den Verbindungselementen 5, den Anschlußplatten 6 und den Anschlußelementen 7 weisen die Profilelemente 4a und 4b Vertiefungen 10 in Form von Bohrungen auf. Diese Vertiefungen 10 sind in dem vorzugsweise als U-Profile ausgebildeten Profilelementen 4a und 4b in deren Steg 11 angeordnet. Der Figur 1 und dort insbesondere dem horizontal verlaufenden Profilelement 4a ist zu entnehmen, daß die Vertiefungen 10 mit gleichen Abständen nebeneinander sowie in Längsrichtung des Profilelementes 4a hintereinander angeordnet sind. Diese Vertiefungen 10 sind als Langlöcher ausgebildet um komplementär paßfederförmig ausgebildete Ansatzkörper 12, die an den Anschlußelementen 7 (siehe Figur 2) und den Verbindungselementen 5 (siehe Figur 3) angeordnet sind, formschlüssig aufzunehmen. Hierdurch ist gewährleistet, daß die Verbindungselemente 5 und die Anschlußelemente 7 verdrehsicher mit den Profilelementen 4a,4b verbindbar sind.

Den Figuren 2 und 3, die eine Detailansicht des Anschlußelementes 7 und des Verbindungselementes 5 zeigen, ist zu entnehmen, daß der Ansatzkörper 12 aus einer benachbarten Auflagefläche 13 des Verbindungselementes 5 oder Anschlußelementes 7 herausragt und somit für die formschlüssige Verbindung in die Vertiefungen 10 einsteckbar ist. Im eingesteckten Zustand liegen die seitlichen Begrenzungen der Ansatzkörper 12 in Form der Auflageflächen 13 formschlüssig an der Begrenzung der Vertiefungen 10 an, sowie der Steg 11 der Profilelemente 4a,4b an den Auflageflächen 13 anliegt. In dieser eingesteckten Position wird das Profilelement 4a,4b mit dem Verbindungselement 5 oder dem Anschlußelement 7 über eine Schraube 14 gehalten, deren Schraubenkopf sich seitlich über den Ansatzkörper 12 erstreckt und sich somit auf dem Steg 11 des Profilelementes 4a,4b abstützt und die über eine Bohrung 16 in dem Ansatzkörper 12 geführt und durch eine Mutter 15 gehalten wird. Die Mutter 15 stützt sich hierbei an der dem Profilelement 4a,4b gegenüberliegenden Seite des Verbindungselementes 5 oder des Anschlußelementes 7 ab.

Ferner ist zu der Ausbildung der Ansatzkörper 12 anzumerken, daß deren Höhe so gewählt ist, daß diese geringfügig kleiner ist als die Wandstärke des Steges 11 der Profilelemente 4a,4b, damit über den seitlich auf den Profilelementen 4a,4b sich abstützenden Kopf der Schraube 14 die Auflageflächen 13 ausreichend an die Innenseites des Steges 11 angezogen werden können.

Den Figuren 2 und 3 ist desweiteren zu entnehmen, daß im vorliegenden Fall das Verbindungselement 5 und das Anschlußelement 7 als Gußteil ausgebildet sind und somit die Mutter 15 als Teil einer Gewindebohrung ausgebildet ist.

Die Figur 2 zeigt außerdem, daß neben dem formschlüssigen Verbindungsteil, das durch die Ansatzkörper 12, die Auflageflächen 13 und die Mutter 15 gebildet wird, hierzu rechtwinklig eine Verbindungsplatte 17 vorgesehen ist, in der die Gewindebohrung 8 zur Aufnahme des Stützfußes 9 angeordnet ist.

Ergänzend ist der Figur 3 zu entnehmen, daß hier zwei formschlüssige Verbindungsteile rechtwinklig zueinander angeordnet sind. Zur Verbindung tauchen beide formschlüssigen Verbindungteile zwischen die Schenkel des U-förmigen Profilelementes 4a,4b ein und deren Ansatzkörper 12 sind von innen in die langlochförmigen Bohrungen 10 hindurchsteckbar. Hierdurch werden die anschraubbaren Profilelemente 4a,4b rechtwinklig zueinander angeordnet.

Ferner ist der Figur 1 zu entnehmen, daß die Anschlußplatten 6 nicht über die zuvor beschriebene formschlüssige Verbindung mit den langlochförmigen Vertiefungen 10 befestigt sind, da in der vorliegenden Ausführungsform diese Anschlußplatten 6 zur Ausrichtung der Längsträger 1 um eine horizontale Achse schwenkbar ausgebildet sind und somit hier ein Formschluß nicht erwünscht ist.

### Bezugszeichenliste

- 1: Längsträger
- 2: Traggestell
- 3: Aufstandsfläche
- 4a,b: Profilelemente
- 5: Verbindungselemente
- 6: Anschlußplatte
- 7: Anschlußelement
- 8: Gewindebohrung
- 9: Stützfuß
- 10: Vertiefungen
- 11: Steg
- 12: Ansatzkörper
- 13: Auflagefläche
- 14: Schraube
- 15: Mutter
- 16: Bohrung
- 17: Verbindungsplatte

## Patentansprüche

1. Traggestell für Förderer, insbesondere für Rollenbahnen, bestehend aus für deren Verbindung untereinander an Verbindungselementen (5) anschraubbaren Profilelementen (4a,b), wobei die Verbindungselemente (5) erhobene Ansatzkörper (12) und die Profilelemente (4a,b) Vertiefungen (10) aufweisen, für die Verbindung eines Profilelementes (4a,b) mit einem Verbindungselement (5) der Ansatzkörper (12) des Verbindungselementes (5) in die hierzu komplementär ausgebildete Vertiefung (10) des Profilelementes (4a,b) formschlüssig einsteckbar ist und der Ansatzkörper (12) in der Vertiefung (10) über eine Verschraubung (Schraube 14, Mutter 15) haltbar ist,
**dadurch gekennzeichnet,**
**daß** die Vertiefungen (10) als langlochförmige Durchgangsbohrungen ausgebildet sind und die Ansatzkörper (12) die Form einer Paßfeder aufweisen.

2. Traggestell nach Anspruch 1,
**dadurch gekennzeichnet,**
**daß** je Verbindung zwischen einem Profilelement (4a,b) und einem Verbindungselement (5) ausschließlich ein in eine Vertiefung (10) einsteckbarer Ansatzkörper (12) vorgesehen ist.

3. Traggestell nach Anspruch 1 oder 2,
**dadurch gekennzeichnet,**
**daß** in dem Ansatzkörper (12) eine Bohrung (16) zur Aufnahme einer Schraube (14) zur Verbindung des Profilelementes (4a,b) mit dem Verbindungselement (5) angeordnet ist.

4. Traggestell nach einem oder mehreren der Ansprüche 1 bis 3,
**dadurch gekennzeichnet,**
**daß** die langlochförmigen Vertiefungen (10) mit ihrer Längserstreckung in Längsrichtung der Profilelemente (4a,b) ausgerichtet sind.

5. Traggestell nach einem oder mehreren der Ansprüche 1 bis 4,
**dadurch gekennzeichnet,**
**daß** die Profilelemente (4a,b) als U-Profile ausgebildet sind, in dessen Steg (11) die Vertiefungen (10) in Längsrichtung der Profilelemente (4a,b) hintereinander sowie mit gleichen Abstand zueinander angeordnet sind.

6. Traggestell nach einem oder mehreren der Ansprüche 1 bis 4,
**dadurch gekennzeichnet,**
**daß** die Verbindungselemente (5) mindestens zwei voneinander beabstandete Ansatzkörper (12) aufweisen, an die eine ebene Auflagefläche (13) für die Profilelemente (4a,b) angrenzt.

7. Traggestell nach einem oder mehreren der Ansprüche 3 bis 6,
**dadurch gekennzeichnet,**
**daß** die Tiefe der langlochförmigen Durchgangsbohrungen (Ausnehmungen 10) geringfügig größer ist als die Höhe der Ansatzkörper (12), in dem die Schraube (14) angeordnet ist, deren Schraubenkopf sich im Montagezustand auf der dem Ansatzkörper (12) abgewandten Seite des Profilelementes (4a,b) abstützt.

## Claims

1. Supporting framework for conveyors, in particular for roller conveyors, comprising profile elements (4a, b) which can be screwed to connecting elements (5) in order to be connected to one another, it being the case that the connecting elements (5) have raised extension bodies (12) and the profile elements (4a, b) have depressions (10), the extension body (12) of a connecting element (5) can be plugged in a form-fitting manner into the complementary depression (10) of a profile element (4a, b), in order for the profile element (4a, b) to be connected to the connecting element (5), and the extension body (12) may be retained in the depression (10) via a screw connection (screw 14, nut 15), **characterized in that** the depressions (10) are designed as slot-like through-passage bores and the extension bodies (12) are in the form of a feather key.

2. Supporting framework according to Claim 1, **characterized in that** exclusively one extension body (12), which can be plugged into a depression (10), is provided for each connection between a profile element (4a, b) and a connecting element (5).

3. Supporting framework according to Claim 1 or 2, **characterized in that** the extension body (12) contains a bore (16) for accommodating a screw (14) for connecting the profile element (4a, b) to the connecting element (5).

4. Supporting framework according to one or more of Claims 1 to 3, **characterized in that** the elongate depressions (10) have their longitudinal extent oriented in the longitudinal direction of the profile elements (4a, b).

5. Supporting framework according to one or more of Claims 1 to 4, **characterized in that** the profile elements (4a, b) are designed as U-profiles, in the web (11) of which the depressions (10) are arranged at equal intervals one behind the other in the longitudinal direction of the profile elements (4a, b).

6. Supporting framework according to one or more of Claims 1 to 4, **characterized in that** the connecting elements (5) have at least two spaced-apart extension bodies (12) which are adjoined by a planar bearing surface (13) for the profile elements (4a, b).

7. Supporting framework according to one or more of Claims 3 to 6, **characterized in that** the depth of the slot-like through-passage bores (cutouts 10) is slightly greater than the height of the extension body (12), in which the screw (14) is arranged, the screw head of the latter being supported, in the fitted state, on that side of the profile element (4a, b) which is directed away from the extension body (12).

## Revendications

1. Cadre de support pour convoyeurs, en particulier pour des transporteurs à rouleaux, constitué d'éléments (4a,b) profilés pouvant être boulonnés sur des éléments (5) de liaison pour leur assemblage mutuel, les éléments (5) de liaison comportant des corps (12) saillants rapportés et les éléments (4a,b) profilés des renfoncements (10), le corps (12) rapporté de l'élément (5) de liaison pouvant, pour l'assemblage d'un élément (4a,b) profilé avec un élément (5) de liaison, être emboîté en engagement positif dans le renfoncement (10), réalisé complémentaire à ce corps, de l'élément (4a,b) profilé, et le corps (12) rapporté pouvant être maintenu dans le renfoncement (10) au moyen d'un boulonnage (boulon 14, écrou 15),
**caractérisé en ce que** les renfoncements (10) sont conçus comme perçages traversants en forme de trous oblongs, et les corps (12) rapportés ont la forme d'une clavette parallèle.

2. Cadre de support suivant la revendication 1, **caractérisé en ce que**, pour chaque assemblage entre un élément (4a,b) profilé et un élément (5) de liaison, il est prévu exclusivement un corps (12) rapporté pouvant être emboîté dans un renfoncement (10).

3. Cadre de support suivant la revendication 1 ou 2, **caractérisé en ce qu'**un perçage (16) est disposé dans le corps (12) rapporté afin de recevoir un boulon (14) pour l'assemblage de l'élément (4a,b) profilé avec l'élément (5) de liaison.

4. Cadre de support suivant une ou plusieurs des revendications 1 à 3, **caractérisé en ce que** les renfoncements (10) en forme de trous oblongs sont orientés en ayant leur étendue longitudinale dans la direction longitudinale des éléments (4a,b) profilés.

5. Cadre de support suivant une ou plusieurs des revendications 1 à 4, **caractérisé en ce que** les éléments (4a,b) profilés sont réalisés sous forme de profilés en U, dans le dos (11) du U desquels les renfoncements (10) sont disposés les uns à la suite des autres dans la direction longitudinale des éléments (4a,b) profilés ainsi qu'à égale distance les uns des autres.

6. Cadre de support suivant une ou plusieurs des revendications 1 à 4, **caractérisé en ce que** les éléments (5) de liaison comportent au moins deux corps (12) raportés mutuellement distants, desquels est adjacente une face (13) d'appui plane pour les éléments (4a,b) profilés.

7. Cadre de support suivant une ou plusieurs des revendications 3 à 6, **caractérisé en ce que** la profondeur des perçages traversants en forme de trous oblongs (évidements 10) est légèrement supérieure à la hauteur des corps (12) rapportés, dans lesquels est disposé le boulon (14) dont la tête de boulon s'appuie, en situation de montage, sur le côté de l'élément (4a,b) profilé qui est opposé au corps (12) rapporté.
